Europäisches Patentamt

European Patent Office

Office européen des brevets

(19)

(11) **EP 1 001 324 B1**

(12) **EUROPÄISCHE PATENTSCHRIFT**

(45) Veröffentlichungstag und Bekanntmachung des Hinweises auf die Patenterteilung:
**21.04.2004 Patentblatt 2004/17**

(51) Int Cl.$^7$: **G05B 19/401**

(21) Anmeldenummer: **99118625.5**

(22) Anmeldetag: **21.09.1999**

(54) **Messverfahren und -system für Rotationsteile, insbesondere für Kolben von Kolbenmaschinen**

Measuring procedure and device for cylindrical objects such as pistons for motors

Procédé et dispositif de mesure pour objets de révolution, en particulier des pistons pour moteur

(84) Benannte Vertragsstaaten:
**DE ES FR GB IT**

(30) Priorität: **11.11.1998 DE 19851954**

(43) Veröffentlichungstag der Anmeldung:
**17.05.2000 Patentblatt 2000/20**

(73) Patentinhaber: **MAHLE GMBH**
**D-70376 Stuttgart (DE)**

(72) Erfinder: **Schnell, Holger**
**71665 Vaihingen/Enz (DE)**

(74) Vertreter: **Patentanwalts-Partnerschaft,**
**Rotermund + Pfusch + Bernhard**
**Waiblinger Strasse 11**
**70372 Stuttgart (DE)**

(56) Entgegenhaltungen:
**EP-A- 0 068 082          EP-A- 0 828 136**
**WO-A-96/12162**

• **PFEIFER T ET AL: "NOCKEN EXAKT MESSEN" WERKSTATT UND BETRIEB, CARL HANSER VERLAG. MUNCHEN, DE, Bd. 130, Nr. 3, 1. März 1997 (1997-03-01), Seiten 135-139, XP000700713 ISSN: 0043-2792**

**Beschreibung**

*Technisches Gebiet der Erfindung*

Die Erfindung liegt auf dem Gebiet Messtechnik und betrifft die Vermessung von Rotationsteilen, insbesondere von Kolben für Verbrennungsmotoren und andere Kolbenmaschinen. Bei solchen Vermessungen kommt es wesentlich darauf an, genaue, oftmals komplexe Messungen schnell und mit möglichst geringem Aufwand zu ermitteln, bei Kolben z. B. die Messung der Aussenform, wobei hier die Messung der Ovalität von besonderem Interesse ist. Damit lässt sich beispielsweise die Eignung eines Kolbens oder anderen Rotationsteils für einen bestimmten Verwendungszweck beurteilen oder eine Qualitätsüberwachung bei der Fertigung durchführen.

*Stand der Technik*

Messungen der genannten Art werden bei Kolben bislang mit auf dem Markt befindlichen Mess-Systemen durchgeführt. Bevorzugt werden sogenannte Rundheits-Formmess-Systeme verwendet, die mit mindestens einem im Prinzip fest angeordneten Tastsystem und rotierendem Objekt arbeiten. Daneben kommen aber auch sogenannte scannende 3-Koordinaten-Mess-Systeme zum Einsatz, bei denen das Messobjekt fest steht und das Mess-System geeignet bewegt wird. Die Rundheits-Formmess-Systeme weisen zumeist folgende Bauteile auf:

- Einen Rotationsmesstisch mit einer X/Y-Positioniereinrichtung;
- Eine Z-Säule mit einer Messtasteraufnahme;
- Einen Rechner (PC) mit angeschlossenem Drucker.

Bei der Messung wird der zu messende Kolben zuerst auf dem Rotationsmesstisch manuell auf einen sogenannten Einpass aufgesetzt und durch sein Eigengewicht oder ein Zusatzgewicht fixiert. Die genaue Ausrichtung oder Positionierung erfolgt entweder manuell durch den Bediener oder - bei neueren Systemen - motorge-steuert.

Hierzu seien beispielhaft einige Grössen- und Genauigkeitserfordernisse angegeben, die einen Eindruck der auftretenden - und zu lösenden - Probleme geben. Präzisionsrotationsteile wie die genannten Kolben werden mit Fertigungstoleranzen im Hundertstel-mm- oder sogar im Mikrometer-Bereich hergestellt. Für eine ausreichend präzise Radialvermessung eines solchen Kolbens ist eine maximale Dezentrierung von ca. 1 µm oder maximal 2 µm zulässig. Nun lässt sich aber mechanisch mit einer guten Bezugsfläche am Kolben und einem präzisen Einpass allenfalls eine Zentrierungs-Genauigkeit von etwa 0,3 mm, also 300 µm erzielen. Um dies auf die erforderlichen 1 bis 2 µm zu reduzieren, benötigen heutige motorgesteuerte Positioniersysteme bis zu 10 Minuten, aber auch eine manuelle Zentrierung ist - neben dem kaum reproduzierbaren "menschlichen Einfluss" - nicht schneller zu bewerkstelligen. Es ist offensichtlich, dass eine solch lange Zeitspanne für viele Anwendungen unbrauchbar ist oder, wenn die Messung unumgänglich ist, unökonomische Verzögerungen im Produktionsablauf mit sich bringt und an sich schon einen erheblichen Kostenfaktor darstellt.

Eine ausreichend genaue Positionierung ist also beim Stand der Technik Voraussetzung für eine brauchbare Radialvermessung zur Ermittlung der Aussenform, insbesondere von solchen Kolben, die eine oder mehrere Unterbrechungen des regelmässigen Formverlaufs aufweisen oder asymmetrisch sind. Zur Messung wird bei den erstgenannten Geräten nun der Kolben gedreht und mit Hilfe zumindest eines Messtasters, der die Aussenform des Kolbens abtastet, ein Diagramm (der sog. Formschrieb) der Kolbenaussenform erstellt, aus dem dann die zu ermittelnden Grössen, z.B. die Ovalität, bestimmt werden können. Üblicherweise erfolgt ein Vergleich derart ermittelter Ist-Werte mit vorgegebenen Soll-Werten. Diese Messmethode, bei der eine punktuelle Einzelinformation des gesamten Aussenformvertaufs ermittelt wird, bezeichnet die Fachwelt als Radialmessung.

Bei Kolben mit unterbrochenem Aussenformverlauf ist eine solche Radialmessung dadurch noch zeitaufwendiger, da ein zu messender Kolben ja sowohl in der XY-Lage zentriert als auch in seiner Winkellage korrigiert werden muss. Die genannte Gesamtzeit von ca. 10 Minuten je Messung kann daher ohne weiteres überschritten werden. Andererseits ist eine solche Radialmessung auch, zumindest für komplizierte Kolben-Aussenformen, mit prinzipbedingten Ungenauigkeiten behaftet, da insbesondere bei manueller Positionierung ein erheblicher Bedienereinfluss berücksichtigt werden muss. Dadurch werden sowohl die Kosten erhöht als auch die Genauigkeit und Reproduzierbarkeit der Messungen negativ beeinflusst.

Zwar kann mit einer anderen Messmethode, der sog. Diametralmessung, die mit zwei sich diametral gegenüberliegenden Messtastem durchgeführt wird, auf eine sehr genaue Positionierung des zu messenden Kolbens verzichtet werden - eine grobe Zentrierung muss allerdings dennoch durchgeführt werden. Damit lässt sich der Zeitaufwand je Messung zwar beträchtlich senken, aber derartige Diametralmessungen sind nur für symmetrische Kolben geeignet und bestimmte Formabweichungen in der Kolbenform können überhaupt nicht erkannt werden. Da in modernen Verbrennungsmotoren mehr und mehr asymmetrische Kolben verwendet werden, nimmt die Zahl der produzierten symmetrischen Kolben sukzessive ab. Damit vermindert sich die Einsatzmöglichkeit der Diametralmessung, weil die Aussenformen asymmetrischer Kolben nur mit Radialmessungen ausreichend genau ermittelt werden können.

Beispiele der genannten Messanordnungen und -verfahren haben M. Rattinger und B. Eble in "Formessungen an Kolben mit kundenspezifischer Software" in F&M 101 (1993) 10, in der Sektion "Messtechnik/Qualitätssicherung", Carl Hanser Verlag, München 1993, auf den Seiten 377 ff. detailliert beschrieben.

Aus der EP 0 068 028 A2 sind ein Verfahren und eine Vorrichtung zur Messung von Rundheitsabweichungen von Rotationskörpern bekannt, bei denen der zu messende Rotationskörper relativ zu einem Abtaster grob zentriert und danach gedreht wird, wobei die vom Abtaster ermittelten Werte in einen Rechner eingegeben werden, der daraus die Exzentrizität, den elliptischen Fehler und ggf. weitere Grössen ermittelt. Damit zeigt die genannte EP zwei Merkmale, allerdings nur in ihren Grundzügen, die prinzipiell auch in der vorliegenden Erfindung Anwendung finden, nämlich die Bestimmung der Exzentrizität eines aufgespannten Rotationsteils und die sich daraus ergebende Korrekturmöglichkeit. Allerdings erscheint das in der genannten EP beschriebene Verfahren wegen der nur grob durchgeführten Zentrierung und insbesondere wegen des vergleichsweise einfachen Rechengangs ungeeignet für die notwendigerweise hochpräzisen Messungen an komplexen Bauteilen und die nachfolgenden Ermittlungen von Abweichungen, die die vorliegende Erfindung angeht. So scheint es mit dem bekannten Verfahren beispielsweise unmöglich, asymmetrische Kolben mit unterbrochenem Außenformverlauf oder ähnliche Bauteile zu messen.

Eine detaillierte Darstellung der Messfehler, die als Folge mangelhafter Ausrichtung bei Rundheitsmessungen der genannten Art auftreten können, ist in dem Artikel "Messunsicherheit - Ursache: Mensch" von Rainer Bartelt, in der Zeitschrift "QZ - Qualität und Zuverlässigkeit", Carl Hanser Verlag, München 1994, auf den Seiten 1136 ff. zu finden. Obwohl sich beide Publikationen im einzelnen mit dem Thema beschäftigen, enthält keine den in der vorliegenden Erfindung gewählten Ansatz, der nachfolgend dargestellt ist.

Vom beschriebenen Stand der Technik ausgehend hat es sich die Erfindung zur Aufgabe gesetzt, einerseits den Zeitaufwand je Messung zu verringern, andererseits die Messgenauigkeit durch Verminderung des Bedienereinflusses und mögliche Vereinfachung der Messeinrichtung zu erhöhen. Es soll insgesamt ein Mess-System geschaffen werden, das schneller und mit geringeren Kosten ein besseres Ergebnis als bisherige Systeme liefert. Ursprünglich insbesondere für den Einsatz zur Messung von Kolben für Verbrennungsmotoren und andere Kolbenmaschinen gedacht, ist es offensichtlich, dass sich das Verfahren und System gemäss der Erfindung ganz allgemein zur Messung von Rotationsteilen eignet.

*Die Erfindung*

Kurz gesagt verfolgt die Erfindung das Ziel, ein System und ein Verfahren zur Radialvermessung von Rotationsteilen, insbesondere Kolben für Verbrennungsmotoren und andere Kolbenmaschinen, zu schaffen, mit dem die erforderlichen Messungen der Aussenformen zuverlässig und rasch, aber dennoch mit ausreichender Genauigkeit durchgeführt werden können. Dabei standen sowohl eine hohe Reproduzierbarkeit der Messergebnisse als auch Vereinfachungen für die Bediener des Mess-Systems im Vordergrund.

Diese Aufgabe wird erfindungsgemäss dadurch gelöst, dass die durch quasi unzentrierte Radialabtastung und daher schnell ermittelten Ist-Messwerte einem speziellen Prozess unterworfen werden, der - kurz gesagt - eine zweistufige Korrektur dieser Ist-Messwerte durchführt. Die aus diesem Korrektur-Prozess gewonnenen, korrigierten Ist-Werte können dann ohne weiteres und unmittelbar verarbeitet werden, z.B. mit vorgegebenen Soll-Messwerten verglichen und damit die Masshaltigkeit des Rotationsteils bestimmt werden. Einzelheiten der Erfindung können den Patentansprüchen entnommen werden; ein Ausführungsbeispiel ist nachfolgend beschrieben.

Am einfachsten lässt sich der Vorteil des erfindungsgemässen Verfahrens anhand einiger Zahlenwerte zeigen. So erreicht man beispielsweise bei einer Verschiebung, d.h. Dezentrierung des zu messenden Kolbens von bis zu 1 mm (was, wie oben gezeigt, ein relativ grosser Wert ist, der ohne weiteres mittels eines zweckentsprechend aufgebauten mechanischen Einpasses auf ein Drittel verringert werden kann) eine reproduzierbare Genauigkeit der Vermessung - betrachtet über den gesamten Umfang des Kolbens, wobei jeweils ein Messpunkt je Winkelgrad anfällt - von etwa 2 $\mu$m. Dieser gute Wert wird selbst bei unterbrochenen und asymmetrischen Kolbenformen erreicht. Allenfalls in sehr ungünstigen Einzelfällen können sich Abweichungen der Reproduzierbarkeit von bis zu 4 $\mu$m ergeben. Versuchte man, ähnlich gute Messergebnisse mit einer der bisher üblichen manuellen oder motorischen Zentrier-Methoden zu erzielen - also ohne Anwendung der Erfindung - so wäre dazu eine (manuelle oder motorische) Korrektur der Dezentrierung auf maximal etwa 0,2 $\mu$m erforderlich - eine nur mit gewaltigem Aufwand erreichbare Zentrierungs-Genauig-keit, die um eine ganze Grössenordnung höher liegt als die mit den handelsüblichen Geräten erzielbare.

*Ausführungsbeispiel*

Ein Ausführungsbeispiel der Erfindung wird nun in Verbindung mit den Zeichnungen näher beschrieben.

In den Zeichnungen zeigen:

Fig. 1          eine schematische Draufsicht auf ein übliches Mess-System, wie es auch für die Erfindung benutzt werden kann;

Fig. 2a, 2b     zwei Ablaufdiagramme, die das erfindungsgemässe Verfahren im Vergleich zum Stand der Technik darstellen;

Fig. 3          die wesentlichen Verfahrenschritte gemäss der Erfindung.

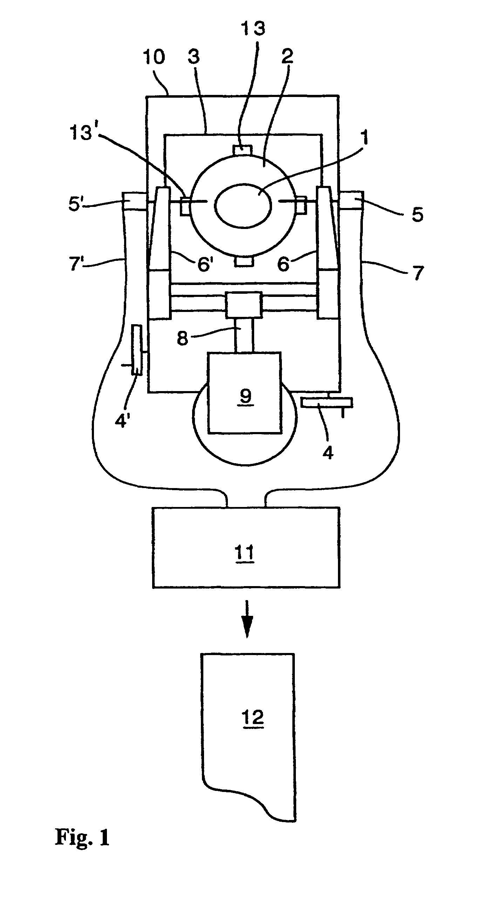

In Fig. 1 ist eine schematische Draufsicht auf ein handelsübliches Mess-System gezeigt, wie es heute beispielsweise bei der Qualitätsprüfung von Kolben für Verbrennungsmotoren eingesetzt wird. Die wesentlichen Teile des Systems sind ein Messtisch 10 mit weiteren Bestandteilen, auf die noch eingegangen werden wird, eine elektronischen Verarbeitungseinheit 11 für die gemessenen Werte und eine Ausgabeeinrichtung für die ermittelten Ergebnisse, hier als Ausdruck (Printout) 12 dargestellt. Als elektronische Verarbeitungseinheit kann ein handelsüblicher PC oder ein auf die besonderen Erfordernisse zugeschnittener Spezialrechner verwendet werden.

Auf dem Messtisch 10 finden Ausrichtung und Abtastung des zu messenden Objekts, hier also des Kolbens 1 statt. Dieser ist auf einem Drehtisch 2 aufgespannt oder in einem darauf befestigten Einpass ausreichend stabil aufgesetzt. Der Drehtisch 2 wiederum ist auf einer gegenüber dem Messtisch 10 positionierbaren Grundplatte 3 drehbar gelagert und dreht bei der Abtastung, d.h. Messung, den Kolben 1. Die Positionierung der Grundplatte 3 erfolgt durch mehrere Positioniereinrichtungen. Die hier als Drehspindel ausgebildete Positioniereinrichtung 4 dient zur Grobeinstellung der Grundplatte 3 in X-Richtung, die Drehspindel 4' zur Einstellung in Z-Richtung. Die beiden als Stellschraubenpaare dargestellten Positioniereinrichtungen 13 und 13' bewirken die Feinjustierung des Drehtischs 2 und damit des Kolbens. In dieser oder ähnlicher Form werden derzeitige Mess-Systeme manuell positioniert.

Bei der oben bereits angesprochenen motorischen Positionierung werden die dargestellten Drehspindeln, Stellschrauben oder vergleichbare Einrichtungen durch Stellmotoren ersetzt, die dann von Signalen der Verarbeitungseinheit 11 gesteuert werden können. Abgesehen vom dafür notwendigen zusätzlichen Aufwand in der Verarbeitungseinheit 11, der ja im wesentlichen in Software bestehen würde, kommt dabei also noch der elektrische (Leitungen und Anschlüsse) und mechanische Aufwand (Stellmotoren), der ein solches Mess-System einerseits verteuert, andererseits anfälliger für Störungen macht.

Zur Abtastung des Kolbens 1 sind zwei Messtaster 5 und 5' gezeigt, die an je einem Haltearm 6 bzw. 6' angebracht sind. Die Haltearme sind über einen Messbügel 8 höhenverschiebbar gegenüber dem Kolben mit der Z-Säule 9 verbunden, wodurch eine Höheneinstellung der Messtaster 5 und 5' gegenüber dem zu messenden Kolben 1 ermöglicht wird. Eine solche Höheneinstellung bzw. -veränderung ist deswegen notwendig, weil Kolben wegen der meist vorhandenen Balligkeit üblicherweise in mehreren Ebenen vermessen werden müssen. Die eigentliche Vermessung erfolgt durch die Messtaster 5 und 5', wobei der Drehtisch 2 mit dem darauf fixierten Kolben 1 gedreht wird.

Das dargestellte Messtasterpaar wird bei der oben beschriebenen Diametralmessung verwendet. Bei einer Radialmessung, wie sie für asymmetrische Kolben meist erforderlich ist, werden nur die von einem der Messtaster gelieferten Messwerte ausgewertet oder es wird überhaupt nur ein einzelner Messtaster 5 verwendet. Im letzteren Fall lässt sich der Aufbau des gesamten Mess-Systems weiter vereinfachen.

Bei der Rotation des Drehtischs 2 werden der Verarbeitungseinheit 11 weiterhin Signale übermittelt, die die Winkelposition des Drehtischs und damit des abgetasteten Kolbens 1 anzeigen. Damit wird die erforderliche winkelbezogene Ermittlung und Darstellung der Messergebnisse möglich. Diese Ermittlung und Übertragung der Winkelposition ist hier nicht dargestellt, da sie auf dem Fachgebiet selbstverständlich ist.

Es ist festzuhalten, dass der Grundaufbau eines Mess-Systems gemäss der Erfindung prinzipiell nicht vom dargestellten Aufbau abweicht, aber sehr wohl noch vereinfacht werden kann. So können beispielsweise bei einem Mess-System, dass gemäss der Erfindung arbeitet, die beiden mechanischen Positioniereinrichtungen 13 und 13' und auch einer der Messtaster 5 oder 5' samt Leitung 7 bzw. 7' weggelassen werden.

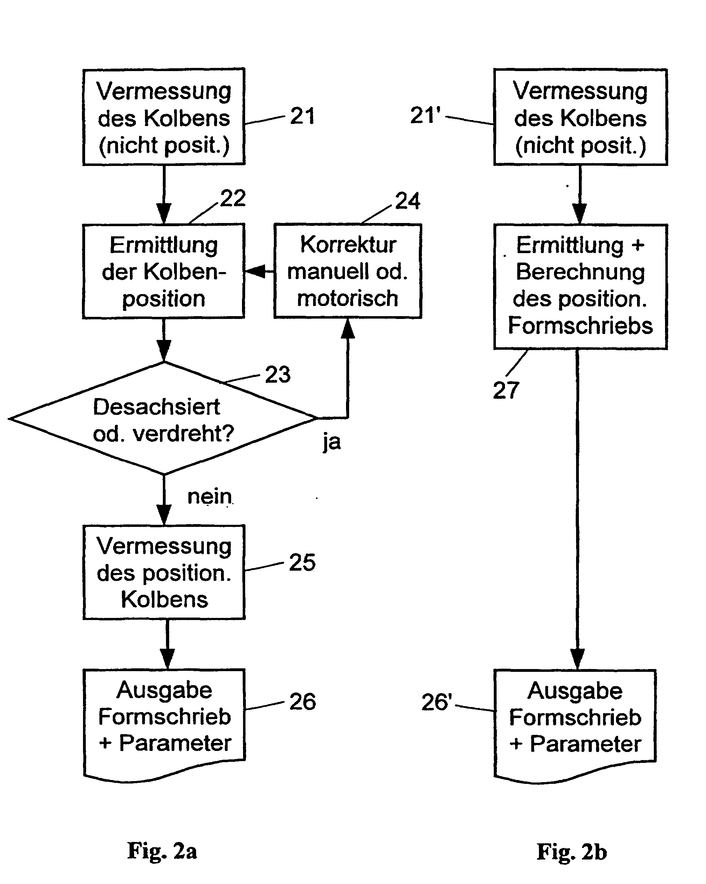

In den beiden Figuren 2a und 2b ist nun die Arbeitsweise der Erfindung dem Stand der Technik gegenübergestellt: Fig. 2a zeigt ein Ablaufdiagramm eines Messverfahrens, wie es dem Stand der Technik entspricht - Fig. 2b im Vergleich dazu ein Ablaufdiagramm des erfindungsgemässen Verfahrens.

Beim Verfahren gemäss dem Stand der Technik erfolgt, wie in Fig. 2a gezeigt, im ersten Verfahrensschritt 21 eine erste (Positions-)Vermessung des auf einem zur Messeinrichtung gehörenden Drehtisch aufgespannten Kolbens. Dieser ist natürlich in diesem Stadium noch nicht positioniert, also weder zentriert noch stimmt seine Winkelposition mit irgendeiner Vorgabe überein. Aus den Messwerten wird im Verfahrensschritt 22 eine erste, noch grobe Position des Kolbens ermittelt. Das Ergebnis ist eine Aussage einerseits darüber, ob der Kolben desachsiert, d.h. exzentrisch aufgespannt ist, d.h. ob sein tatsächlicher Rotationsmittelpunkt mit dem geometrischen Rotationsmittelpunkt übereinstimmt. Anderseits ist das Ergebnis eine Aussage darüber, ob der Kolben verdreht ist, d.h. ob seine Winkelposition mit einer vorgegebenen Winkellage übereinstimmt. Diese Entscheidung ist durch den Verfahrensschritt 23 symbolisiert. Da davon ausgegangen werden muss, dass ursprünglich der Kolben sowohl desachsiert als auch verdreht ist, erfolgt im Verfahrensschritt 24 eine erste Korrektur eines oder beider Fehlpositionierungen. Diese Korrektur kann, wie schon erwähnt, manuell erfolgen oder auch teilweise automatisiert werden. Nun werden iterativ die Verfahrensschritte 21 bis 24 wiederholt durchlaufen, bis die Prüfung im Verfahrensschritt 23 einen vorzuwählenden Grenzwert bezüglich Desachsierung/Exzentrizität und Verdrehung des Kolbens unterschreitet. Erst jetzt erfolgt die eigentliche Vermessung des näherungsweise positionierten Kolbens im Verfahrensschritt 25 und danach eine Ausgabe eines sog. Formschriebs und/oder der Formparameter in anderer Weise im Verfahrensschritt 26. Ein Vergleich der ermittelten Ist-Messwerte mit vorgegebenen Soll-Messwerten ist nun möglich, z.B. um die Masshaltigkeit von Kolbenexemplaren aus einer Serienfertigung zu überprüfen.

Es ist offensichtlich, dass beim bekannten Verfahren die Positionierung, die der eigentlichen Messung des Kolbens vorausgeht, den Zeitaufwand, die Genauigkeit und die Wiederholbarkeit der gesamten Messung entscheidend beeinflusst.

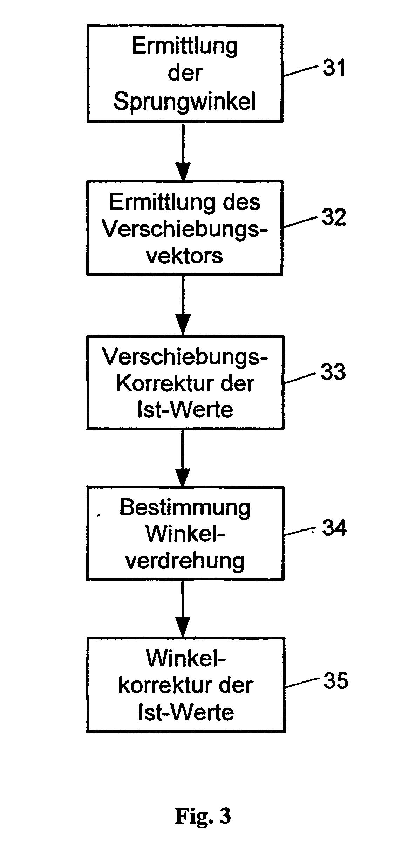

Das erfindungsgemässe Verfahren ist in Fig. 2b in direkter Gegenüberstellung dargestellt. Der Verfahrensschritt 21' sieht auf den ersten Blick wie der Verfahrensschritt 21 im Stand der Technik aus, aber diese Entsprechung ist nur scheinbar. In diesem ersten Verfahrensschritt gemäss der Erfindung wird der unzentriert, d.h. allenfalls grob oder auch gar nicht positioniert aufgespannte Kolben ebenfalls vermessen - aber nach dieser Vermessung erfolgt keinerlei (räumliche) Positions-Korrektur des Kolbens. Die Ermittlung des "positionierten" Formschriebs und ggf. der Formparameter des ausgemessenen Kolbens erfolgt ausschliesslich im Verfahrensschritt 27, der nachfolgend genauer beschrieben wird. Pointiert ausgedrückt kann man diesen Verfahrensschritt 27 als Kern der Erfindung bezeichnen; er wird nachfolgend anhand der Fig. 3 im einzelnen erläutert.

Fig. 3 zeigt nun die einzelnen Teilschritte des in Fig. 2b als Verfahrensschritt 27 bezeichneten Vorgangs, die nachfolgend beschrieben werden sollen.

Im ersten Teilschritt 31 werden die sog. Sprungstellen am Umfang des abgetasteten Rotationsteils, hier also des Kolbens 1, ermittelt. Bei einem Kolben sind solche Sprungstellen beispielsweise an der Nabenbohrung für den Kolbenbolzen oder an den Enden der Schaftlappen (bei einem Schaftkolben) vorhanden. Natürlich können Sprungstellen auch durch irgendwelche Unregelmässigkeiten, also Fehler des Kolbens hervorgerufen werden.

Zuerst seien einige Bezeichnungen und die Nomenklatur definiert. Der bei der Abtastung des Kolbenumfangs ermittelte Satz von winkelbezogenen IstWerten sei als $ri(\varphi = 0...359)$ bezeichnet. Der entsprechende Satz von winkelbezogenen Soll-Werten ist $rs(\varphi = 0...359)$. Im Teilschritt 31, der zur Ermittlung der Sprungstellen dient, wird die Differenz jedes einzelnen Ist-Messwerts, z.B. $ri(\varphi = 10)$ mit dem jeweils um 3° darüber und/oder darunter liegenden Messwert, also $ri(\varphi = 13)$ und/oder $ri(\varphi = 7)$ gebildet und mit einer vorgegebenen Konstante, der sog. Sprungbedingungs-Kolbenkonstante $K$, verglichen. Im Beispiel ist diese Kolbenkonstante zu $K = 0{,}1$ gewählt. Dieser empirisch bestimmte Wert hat sich als guter Ansatz erwiesen. Analog wird mit den um 180° versetzten Messwerten verfahren. Dies lässt sich folgendermassen ausdrükken (Formeln 1):

$$sp12 = i - 3 \qquad \text{mit} \qquad i = \max i: [ri(i) - ri(i + 3) > K]$$

$$sp21 = 183 - i \qquad \text{mit} \qquad i = \max i: [ri(180 - i) - ri(177 - i) > K]$$

$$sp22 = 177 + i \qquad \text{mit} \qquad i = \max i: [ri(180 + i) - ri(183 + i) > K]$$

$$sp11 = 362 - i \qquad \text{mit} \qquad i = \max i: [ri(359 - i) - ri(356 - i) > K] \qquad \text{(Formeln 1)}$$

Hieraus ergeben sich nun vier Sprungwinkel, hier $sp11$ bis $sp22$, d.h. die Kolbenaussenform besteht im Beispiel offensichtlich aus zwei Kolbensegmenten, die durch die vier Sprungwinkel definiert sind. Die ermittelten Sprungwinkel dienen als Basis für weitere Bestimmungen.

Im folgenden Teilschritt 32, dem ersten Korrekturschritt, wird nun die wegen der fehlenden Positionierung üblicherweise existierende Differenz, d.h. die Exzentrizität oder Verschiebung zwischen dem virtuellen Drehpunkt eines Kolbensegments vom tatsächlichen, für die Abtastung massgebenden Rotationsdrehpunkt, ermittelt. Hierzu werden die winkelbezogenen Soll-Messwerte in die Betrachtung einbezogen und in Verknüpfung mit den Ist-Messwerten die beiden kartesischen Abstandskomponenten sx und sy des Verschiebungsoder Exzentrizitätsvektors ermittelt. Das Ergebnis dieser ersten Korrektur sind verschiebungskorrigierte, winkelbezogene Ist-Messwerte; schrittweise lässt sie sich folgendermassen darstellen. Zuerst erfolgt die Transformation der Ist-Messwerte. Dies ist in den folgenden Formeln 2 ausgedrückt.

$$sx = \frac{\sum_{k=1..\min(sp11..sp22)} \frac{ri(k) - ri(180-k) - ri(180+k) + ri(360-k)}{4*\cos(2k\pi/360)}}{\sum_{k=1..\min(sp11..sp22)} \cos(2k\pi/360)^2}$$

$$sy = \frac{\sum_{k=1..\min(sp11..sp22)} \frac{ri(k) + ri(180-k) - ri(180+k) - ri(360-k)}{4*\sin(2k\pi/360)}}{\sum_{k=1..\min(sp11..sp22)} \sin(2k\pi/360)^2}$$

**(Formeln 2)**

Danach erfolgt zur Bestimmung des Verschiebungsvektors die gleiche Transformation mit den entsprechenden, die gleichen Segmente betreffenden, winkelbezogenen Soll-Messwerten. Dies ist nachfolgend in Formeln 3 dargestellt.

$$rx = \frac{\sum_{k=1..\min(sp11..sp22)} \frac{rs(k) - rs(180-k) - rs(180+k) + rs(360-k)}{4*\cos(2k\pi/360)}}{\sum_{k=1..\min(sp11..sp22)} \cos(2k\pi/360)^2}$$

$$ry = \frac{\sum_{k=1..\min(sp11..sp22)} \frac{rs(k) + rs(180-k) - rs(180+k) - rs(360-k)}{4*\sin(2k\pi/360)}}{\sum_{k=1..\min(sp11..sp22)} \sin(2k\pi/360)^2}$$

**(Formeln 3)**

Nun werden die Ergebnisse der Transformationen der Ist-Messwerte und der Soll-Messwerte gemäss

$$sxx = sx - rx \hspace{3cm} \text{(Formeln 4)}$$

$$syy = sy - ry$$

miteinander verknüpft, womit sich der gesuchte Verschiebungs- oder Exzentrizitätsvektor zwischen unzentriertem und zentriertem Kolben ergibt als

$$\bar{s} = \begin{pmatrix} sxx \\ syy \end{pmatrix} \qquad \text{(Formel 5)}$$

oder in Zylinderkoordinaten

$$s = \sqrt{sxx^2 + syy^2}$$

$$\text{(Formeln 6)}$$

$$\theta = \begin{cases} atn(syy \,/\, sxx) * 360\,/\,2\,/\,\pi, sxx > 0 \\ 180 + atn(syy \,/\, sxx) * 360\,/\,2\,/\,\pi, sxx < 0 \end{cases}$$

Es scheint, dass die Anwendung des Verschiebungsalgorithmus gemäss Formel 2 nicht auf die Ist-Messwerte, sondern auch auf die - auf den ersten Blick ja "exakten" - Soll-Messwerte gemäss Formel 3 einen wesentlichen Beitrag zur Erhöhung der mittels der Erfindung erzielbaren Genauigkeit liefert. Zwar sind die Terme rx und ry relativ klein gegenüber den Termen *sx* und *sy*, scheinen aber einen entscheidenden Beitrag zu liefern.

Es scheint ausserdem, dass erst der durch die Mittelpunktstransformation auch der Soll-Messwerte durchgeführte Bezug auf die gleiche Basis die gezeigte Universalität des Verfahrens bei grosser Unabhängigkeit von den Formen der zu prüfenden Rotationskörper und gleichzeitig hoher Genauigkeit erreicht wird.

Im nachfolgenden Teilschritt 33 wird nun mit den Ist-Messwerten die eigentliche Verschiebungstransformation durchgeführt, d.h. es werden winkelbezogene, verschiebungskorrigierte Ist-Messwerte ermittelt. Dazu werden aus den Ist-Messwerten *ri(φ)* zuerst gemäss der Formel

$$ai(\varphi) = ri(\varphi) + radius \qquad \text{(Formel 7)}$$

Hilfswerte *ai(φ)* erzeugt, die gewissermassen Absolutwerte darstellen. Der Wert *radius* ist darin der ungefähre mittlere Absolut-Radius des Rotationsteils.

Danach erfolgt die Verschiebungstransformation, d.h. es werden die verschiebungskorrigierten Ist-Messwerte *ti(φ)* ermittelt gemäss

$$ti(\varphi) = \sqrt{ai(\varphi)^2 + s^2 - 2*s*ai(\varphi)*\cos((\varphi - \theta)/360*2*\pi)} - radius + s*\cos(\theta/360*2*\pi) \qquad \text{(Formel 8)}$$

Nach dieser Bestimmung und Korrektur der Verschiebung oder Exzentrizität des unzentriert aufgespannten und abgetasteten Kolbens erfolgt die Bestimmung der Verdrehung des Kolbens gegenüber einer vorgegebenen Null- oder Ausgangslage, d.h. eines Korrektur-Winkels zur Kompensation dieser Verdrehung in den Ist-Messwerten. Dies erfolgt im Teilschritt 34.

Dazu wird das Minimum der Abweichungen

$$abweich = \sum_{\substack{\varphi+xv=i=0..359 \\ Nb}} (ti(\varphi + xv) - rs(i) - yv)^2$$

mit

$$yv = \sideset{}{}\sum_{\substack{\varphi+xv=i=0..359 \\ Nb}} ti(\varphi + xv) - rs(i)$$

und der folgenden Nebenbedingung bestimmt:

$$Nb : (\varphi + xv < sp11) \vee (\varphi + xv > sp12) \vee (\varphi + xv < sp21 \wedge \varphi + xv > sp22) \qquad \text{(Formel 9)}$$

Der Winkel *xv* ist dabei ein zu variierender Verdrehungswinkel gegenüber der Ausgangslage, quasi die "x-Verschiebung" der Ist-Kurve zur Soll-Kurve des linearen Aussenformschriebs. Das Mass *yv* ist die jeweils zugehörige radiale Verschiebung, also die "y-Verschiebung" oder auch Größenanpassung des Rotationsteils, zwischen Ist- und Soll-Kurve. Grundlage für die Verdrehungsermittlung ist dabei eine Einpassung zwischen der verschiebungskorrigierten Ist-Messwerte *ti* und der Soll-Messwerte *rs* nach der Bedingung des kleinsten Fehlerquadrats.

Für dieses Minimum der Abweichung, *abweich* = min, ist *xvopt* der ermittelte Korrektur-Winkel; dies ist der Winkel, um den die Ist-Messwerte korrigiert werden müssen, um - zusätzlich zur bereits korrigierten Exzentrizität - auch die Winkelfehllage zu korrigieren. Wie im Teilschritt 35 dargestellt, erfolgt diese (zweite) Korrektur durch folgende Transformation der winkelbezogenen, verschiebungskorrigierten Ist-Messwerte:

$$ri(\varphi) \rightarrow ri(\varphi - xvopt). \qquad \text{(Formel 10)}$$

Mittels eines einfachen Interpolationsalgoritmus kann dabei eine Feinjustierung der Winkellage in $0,1°$-Schritten durchgeführt werden.

Damit sind beide Korrekturen, die der Exzentrizität und die der Winkelfehllage, durchgeführt, womit die jetzt vollständig korrigierten Ist-Messwerte unmittelbar mit den Soll-Messwerten verglichen werden können und damit beispielsweise die Masshaltigkeit des Kolbens in der gemessenen Ebene bestimmt werden kann. Bei einem in z-Richtung symmetrischen Kolben kann nun unmittelbar in einer weiteren Ebene des Kolbens gemessen werden. Dazu ist nur eine Verschiebung des Messrahmens 8 in der z-Achse erforderlich, da in diesem Falle die Positionskorrekturen für jede Mess-Ebene desselben Kolbens gelten.

Sollten die mit den bisher beschriebenen Schritten durchgeführten Korrekturen noch nicht ausreichen - was wegen der möglichen Abhängigkeit zwischen Winkelfehllage/Verdrehung und Desachsierung/Exzentrizität nicht auszuschliessen ist - so werden die beschriebenen Teilschritte 31 bis 35 mit den korrigierten Werten nochmals durchlaufen. Diese Nach-Korrektur bewirkt, dass die Genauigkeit der nun abermals korrigierten Ist-Messwerte sowohl für die ermittelten Sprungstellen als auch für die Desachsierung/Exzentrizität weiter erhöht wird.

Weiterhin kann wahlweise eine Feinjustierung derart durchgeführt werden, dass die Teilschritte 32 bis 34 mit iterativ veränderten (*sxx, syy*)-Werten nochmals durchlaufen werden. Mit dieser sozusagen infinitesimalen (*sxx/syy*)-Variation erhält man ein globales Minimum des Wertes der Abweichung *abweich,* womit die Genauigkeit der Korrektur in Einzelfällen, d.h. wenn notwendig, noch weiter erhöht werden kann.

Der endgültige Satz von Ist-Messwerten, der auch die genannte Nach-Korrektur und die beschriebene Feinjustierung einbeziehen kann, stellt sich dann folgendermassen dar und kann als sog. "positionierte" Radialkurve ausgegeben werden:

$$rit(\varphi) = \sqrt{ai(\varphi)^2 + opts^2 - 2*opts*ai(\varphi)*\cos((\varphi - opt\theta) / 360*2*\pi)}$$

$$- radius + opts*\cos(opt\theta / 360*2*\pi) - optyv \qquad \text{(Formel 11)}$$

Die darin genannten Variablen mit dem Präfix *opt* sind optimierte Werte, wie sie beispielsweise im vorhergehenden Teilschritt der Feinjustierung ermittelt werden können. Wird das Verfahren ohne diese Feinjustierung durchgeführt, so sind an Stelle der optimierten Werte die ursprünglich berechneten Werte, wie sie in obigen Ausführungen ohne den Präfix *opt* angegeben waren, einzufügen.

Im abschliessenden Verfahrensschritt 26' (Fig. 2b) erfolgt schliesslich die Ausgabe eines sog. Formschriebs und/oder der Formparameter des ausgemessenen Kolbens in beliebiger anderer Weise. Nun ist auch ein Vergleich der ermittelten Ist-Messwerte mit vorgegebenen Soll-Messwerten möglich und jede weitere gewünschte Be- oder Verarbeitung dieser Werte.

Die Teilschritte des Verfahrensschritts 27 können auf einem handelsüblichen PC - der selbstverständlich in seiner Leistung den Erfordernissen genügen muss - als Rechenoperationen durchgeführt werden. Auch die beschriebenen Iterationen, die ja optional sind, sich aber in manchen Fällen anbieten, können auf einem solchen Computer schnell und mit geringem Aufwand durchgeführt werden. Es liegt auf der Hand, das dies nicht nur viel schneller durchgeführt werden kann, als jede manuelle oder motorische Positionierung, sondern dass auch Fehler, die durch Unachtsamkeit des Bedieners, mangelnde Qualifikation oder mechanische Ungenauigkeiten auftreten können, praktisch ausgeschlossen sind oder kompensiert werden. Daraus ergibt sich auch die wesentlich höhere Reproduzierbarkeit der Messergebnisse als bei Anwendung bisheriger Verfahren. Dazu kommt noch, dass Anpassungen an veränderte Messvoraussetzungen und/oder Bauweisen der zu messenden Rotationsteile durch Veränderung der verwendeten Software schnell und üblicherweise sehr ökonomisch durchgeführt werden können.

Das erfindungsgemässe Verfahren ist natürlich auch nicht auf Systeme mit relativ festem Abtaster und rotierendem Messobjekt beschränkt, sondern lässt sich auf jedes Mess-System anwenden, bei dem winkelabhängige Messwerte ermittelt und/oder mit entsprechenden Sollwerten - zu welchem Zweck auch immer - verglichen werden.

Gerade wegen seiner relativen Einfachheit ist das erfindungsgemässe Prinzip offensichtlich auch geeignet zur Messung von Rotationsbauteilen, die unter ähnlichen Voraussetzungen wie die im Beispiel beschriebene Messung an Kolben durchgeführt werden. Demgemäss sollte es der Fachperson keine grossen Schwierigkeiten bereiten, das für Kolben beschriebene Ausführungsbeispiel in einer Weise zu modifizieren, dass es für ähnliche Messungen an anderen Rotationskörpem geeignet ist und dabei die gleichen Vorteile wie bei der beschriebenen Anwendung erzielt werden.

*Bezugszeichenliste*

Folgende Elemente sind in den Figuren mit Bezugszeichen benannt:

**Fig. 1**

| | |
|---|---|
| 1 | Messobjekt, hier Kolben |
| 2 | Drehtisch mit Aufspannvorrichtung für Kolben |
| 3 | positionierbare Grundplatte |
| 4, 4' | Positioniereinrichtungen für X- und Z-Ausrichtung, hier manuell |
| 5, 5' | Messtaster |
| 6, 6' | Haltearm für Messtaster |
| 7, 7' | Leitungen vom Messtaster |
| 8 | Messbügel |
| 9 | Z-Säule mit Höheneinstellvorrichtung für Messbügel/Messtaster |
| 10 | Messtisch |
| 11 | Verarbeitungseinheit, PC |
| 12 | Ergebnisanzeige, hier Formschrieb |
| 13, 13' | Einrichtungen für X- und Y-Fein-Positionierung, hier manuell |

**Fig. 2** Verfahrensschritte

| | |
|---|---|
| 21, 21' | Vermessung des nicht positionierten Kolbens |
| 22 | Ermittlung der Kolbenposition |
| 23 | Entscheidungs-Verzweigung |
| 24 | manuelle oder motorische Positions-Korrektur |
| 25 | Vermessung des positionierten Kolbens |
| 26, 26' | Ausgabe, z.B. Formschrieb |
| 27 | Ermittlung der Kolbenposition und der Korrekturwerte |

**Fig. 3** Teilschritte des Verfahrensschritts 27 von Fig. 2

31    Ermittlung des/der Sprungwinkel
32    Ermittlung des Verschiebungsvektors
33    Verschiebungskorrektur der Messwerte
34    Ermittlung der Winkelverdrehung
35    Winkelkorrektur der Messwerte


**Patentansprüche**

1. Verfahren zum Vermessen eines Rotationsteils (1), insbesondere zum Ermitteln der Maßhaltigkeit eines Kolbens für Verbrennungsmotoren und andere Kolbenmaschinen, durch Abtretung seiner Oberfläche, bei dem zum Vergleich mit vorliegenden Sollmesswerten winkelbezogene Ist-Messwerte des zu messenden Rotationsteils, vorzugsweise aus einer Relativbewegung zwischen einem Abtaster (5, 5') und dem zu messenden Rotationsteil, gewonnen werden,
   *dadurch gekennzeichnet, dass*

   A. aus dem Vergleich von ausgewählten winkelbezogenen Ist-Messwerten miteinander solche Winkelpositionen ermittelt und als Sprungwinkel gespeichert werden, bei denen ausserhalb eines vorgegebenen Wertes oder Wertebereichs liegende Änderungen der Ist-Messwerte auftreten, und diese Sprungwinkel als Basis für die Teilung der Aussenform des Rotationsteils in Segmente dienen (31),
   B. aus den Ist-Messwerten und Soll-Messwerten die Exzentrizität, d.h. der Abstand vom geometrischen zum tatsächlichen oder, bei Gewinnung der Ist-Messwerte in anderer Weise, vom virtuellen Drehpunkt eines Segments des Rotationsteils als Verschiebungsvektor ermittelt wird (32),
   C. in einem ersten Korrekturschritt mittels des Verschiebungsvektors aus den Ist-Messwerten verschiebungskorrigierte Ist-Messwerte bestimmt werden (33),
   D. aus den Ist-Messwerten und entsprechenden Soll-Messwerten ein Mass für die Verdrehung, d.h. Winkelfehllage, des Rotationsteils gegenüber den Soll-Messwerten ermittelt wird (34) und mittels dieses Verdrehungsmasses in einem zweiten Korrekturschritt verdrehungskorrigierte Ist-Messwerte bestimmt werden (35), und
   E. die Maßhaltigkeit des Rotationsteils durch einen Vergleich der verschiebungs- und verdrehungskorrigierten, winkelbezogenen Ist-Messwerte mit den winkelbezogenen Soll-Messwerten bestimmt wird.

2. Verfahren zum Vermessen eines Rotationsteils nach Anspruch 1,
   *weiterhin dadurch gekennzeichnet, dass*

   - zumindest einige der winkelbezogenen Ist-Messwerte mit in einem vorgegeben Abstand benachbarten Ist-Messwerten jeweils einzeln verglichen und, falls das Vergleichsergebnis ausserhalb des vorgegebenen Wertes oder Wertebereichs liegt, der zugehörige Winkel als Sprungwinkel gespeichert wird.

3. Verfahren zum Vermessen eines Rotationsteils nach Anspruch 1,
   *weiterhin dadurch gekennzeichnet, dass*

   - mit den verschiebungs- und verdrehungskorrigierten, winkelbezogenen Ist-Messwerten die Verfahrensschritte A bis D ein- oder mehrfach iterativ durchlaufen werden.

4. Verfahren zum Vermessen eines Rotationsteils nach zumindest einem der Ansprüche 1 oder 2,
   *weiterhin dadurch gekennzeichnet, dass*

   - die aus der Abtastung des Rotationsteils gewonnen Ist-Messwerte mit einer Auflösung von 0,5° bis 2°, vorzugsweise 1°, winkelbezogen ermittelt und gespeichert werden, und
   - der vorgegebene Abstand, mit dem zumindest einige der winkelbezogenen Ist-Messwerte mit benachbarten Ist-Messwerten verglichen werden, zwischen 2° und 5°, vorzugsweise 3°, beträgt.

5. Verfahren zum Vermessen eines Rotationsteils nach zumindest einem der vorhergehenden Ansprüche,
   *weiterhin dadurch gekennzeichnet, dass*

- der für das Vergleichsergebnis gemäss Verfahrensschritt A massgebende Wert, bei dessen Überschreitung der zugehörige Winkel als Sprungwinkel gespeichert wird, zwischen $K = 0,01$ und $K = 0,5$ gewählt wird, vorzugsweise als sog. Kolbenkonstante zu $K = 0,1$.

**6.** Verfahren zum Vermessen eines Rotationsteils nach zumindest einem der vorhergehenden Ansprüche, *weiterhin dadurch gekennzeichnet, dass*

- die Bestimmung des Verschiebungsvektors entsprechend Verfahrensschritt B in der Weise erfolgt, dass die kartesischen Verschiebungs-Komponenten bestimmt werden aus

$$sxx = sx - rx, \qquad syy = sy - ry$$

und

$$\vec{s} = \begin{pmatrix} sxx \\ syy \end{pmatrix},$$

- worin $sx$ und $sy$ die karthesischen Werte des tatsächlichen Rotationszentrums bei der Abtastung sind, $rx$ und $ry$ die kartesischen Werte des Sollwert-Rotationszentrums sind und $\vec{S}$ der Verschiebungsvektor ist.

**7.** Verfahren zum Vermessen eines Rotationsteils nach zumindest einem der vorhergehenden Ansprüche, *weiterhin dadurch gekennzeichnet, dass*

- zur Ermittlung der Verdrehung oder Winkelfehllage des Rotationsteils die Abweichungen der verschiebungskorrigierten, winkelbezogenen Ist-Messwerte von winkelbezogenen Soll-Messwerten ermittelt werden und der Winkel, bei dem das Minimum der Abweichung auftritt, als Korrekturwinkel für die Winkelfehllage der verschiebungskorrigierten, winkelbezogenen Ist-Messwerte dient.

**8.** Vorrichtung zum Vermessen eines Rotationsteils (1), insbesondere zum Ermitteln der Maßhaltigkeit eines Kolben für Verbrennungsmotoren und andere Kolbenmaschinen, durch Abtastung seiner Oberfläche, bei der zum Vergleich mit vorliegenden Soll-Messwerten winkelbezogene Ist-Messwerte des zu messenden Rotationsteils, vorzugsweise aus einer Relativbewegung zwischen einem Abtaster und dem zu messenden Rotationsteil, benutzt werden, wobei die Vorrichtung

- eine Aufnahmevorrichtung (2) für das Rotationsteil (1),
- mindestens einen Messtaster (5, 5') zur Abtastung des Rotationsteils bei relativer Drehung des Rotationsteils zum Messtaster (5, 5'),
- eine Einrichtung zur Winkelbestimmung zwischen Messtaster und Rotationsteil,
- einen Rechner (11),

  - der Speichermittel zur Aufnahme von Messwerten und Programmen enthält oder mit solchen verbindbar ist und
  - mit dem Messtaster (5, 5') und der Einrichtung zur Winkelbestimmung zur Aufnahme der winkelbezogenen Ist-Messwerte verbindbar ist,
  - und eine Ausgabeeinrichtung zur Darstellung der gemäss dem Verfahren ermittelten Ergebnisse aufweist (12),

*dadurch gekennzeichnet, dass*
folgendes Verfahrensprogramm implementiert ist:

A. aus dem Vergleich von ausgewählten winkelbezogenen Ist-Messwerten miteinander werden solche Winkelpositionen ermittelt und als Sprungwinkel gespeichert, bei denen ausserhalb eines vorgegebenen Wertes oder Wertebereichs liegende Änderungen der Ist-Messwerte auftreten, und diese Sprungwinkel als Basis für die Teilung der Aussenform des Rotationsteils in Segmente dienen,

B. aus den Ist-Messwerten und Soll-Messwerten wird die Exzentrizität, d.h. der Abstand vom geometrischen zum tatsächlichen oder, bei Gewinnung der Ist-Messwerte in anderer Weise, vom virtuellen Drehpunkt eines Segments des Rotationsteils als Verschiebungsvektor ermittelt,

C. in einem ersten Korrekturschritt werden mittels des Verschiebungsvektors aus den Ist-Messwerten verschiebungskorrigierte Ist-Messwerte bestimmt,

D. aus den Ist-Messwerten und entsprechenden Soll-Messwerten wird ein Mass für die Verdrehung, d.h. Winkelfehllage, des Rotationsteils gegenüber den Soll-Messwerten ermittelt und mittels dieses Verdrehungsmasses werden in einem zweiten Korrekturschritt verdrehungskorrigierte Ist-Messwerte bestimmt, und

E. die Masshaltigkeit des Rotationsteils wird durch einen Vergleich der verschiebungs- und verdrehungskorrigierten, winkelbezogenen Ist-Messwerte mit den winkelbezogenen Soll-Messwerten bestimmt.

9. Vorrichtung nach Anspruch 8,
**_dadurch gekennzeichnet, dass_**

- die Vorrichtung (2) zur Aufnahme eines Rotationsteils (1) auf einem gegenüber dem Messtaster (5) starren, d.h. unverschiebbaren Grundplatte (3) drehbar und vorzugsweise ortsfest gelagert ist.

10. Vorrichtung nach Anspruch 8 oder 9,
**_dadurch gekennzeichnet, dass_**

- der Messtaster (5) mittels einer verstellbaren Haltevorrichtung (6, 8, 9) derart angebracht ist, dass eine Abtastung des Rotationsteils (1) in mindestens zwei Ebenen erfolgen kann.

11. Verwendung einer an sich bekannten Vorrichtung zum Vermessen eines Rotationsteils mit

- einer Aufnahmevorrichtung (2) für das Rotationsteil (1),
- mindestens einem Messtaster (5) zur Abtastung des Rotationsteils bei relativer Drehung des Rotationsteils zum Messtaster,
- einer Einrichtung zur Winkelbestimmung zwischen Messtaster (5) und Rotationsteil (1),
- einem Rechner (11),

  - der Speichermittel zur Aufnahme von Messwerten und Programmen enthält oder mit solchen verbindbar ist und
  - mit dem Messtaster (5) und der Einrichtung zur Winkelbestimmung zur Aufnahme der winkelbezogenen Ist-Messwerte verbindbar ist,

- und einer Ausgabeeinrichtung zur Darstellung der ermittelten Ergebnisse

zur Durchführung des Verfahrens nach mindestens einem der Ansprüche 1 bis 7.


**Claims**

1. A method of measuring a rotational part (1), in particular for determining the dimensional stability of a piston for internal combustion engines and other piston engines by scanning its surface, whereby angle-based actual measured values of the rotational part to be measured are obtained for comparison with existing setpoint measured values, preferably from a relative movement between a scanner (5, 5') and the rotational part to be measured,
   **characterized in that**

   A. from the comparison of selected angle-based actual measured values, angular positions at which changes in the actual measured values outside of a predetermined value or value range occur are determined and stored as discontinuity angles, and these discontinuity angles are used as the basis for dividing the outside shape of the rotational part into segments (31),

   B. the eccentricity, i.e., the distance from the geometric center of rotation to the actual center of rotation of a segment of the rotational part, or when obtaining the actual measured values by some other method, the distance from the virtual center of rotation of a segment of the rotational part is determined as the displacement vector (32),

C. in a first correction step, displacement-corrected actual measured values are determined by means of the displacement vector from the actual measured values (33),

D. a measure for the torsion, i.e., the faulty angular position of the rotational part in comparison with the setpoint measured values is determined from the actual measured values and corresponding setpoint 'measured values (34) and by means of this measure of torsion, torsion-corrected actual measured values are determined in a second correction step (35), and

E. the dimensional stability of the rotational part is determined by comparing the displacement-corrected and torsion-corrected, angle-based actual measured values with the angle-based setpoint measured values.

2.  The method of measuring a rotational part according to Claim 1,
    also **characterized in that**
    at least some of the angle-based actual measured values are compared individually

    -   adjacent actual measured values at a predetermined distance and, if the result of the comparison is outside of the predetermined value or value range, the respective angle is stored as a discontinuity angle.

3.  The method of measuring a rotational part according to Claim 1,
    also **characterized in that**

    -   the method steps A through D are run through iteratively once or several times using the displacement-corrected and torsion-corrected, angle-based actual measured values.

4.  The method of measuring a rotational part according to at least one of Claims 1 or 2,
    also **characterized in that**

    -   the actual measured values obtained by scanning the rotational part are determined in an angle-based method with a resolution of 0.5° to 2°, preferably 1°, and are stored, and
    -   the predetermined distance with which at least some of the angle-based actual measured values are compared with adjacent actual measured values amounts to between 2° and 5°, preferably 3°.

5.  The method of measuring a rotational part according to at least one of the preceding claims,
    also **characterized in that**

    -   the value that is important for the result of the comparison according to the method step A, such that when it is exceeded the respective angle is stored as a discontinuity angle, is selected between K = 0.01 and K = 0.5, preferably is a so-called piston constant of K = 0.1.

6.  The method for measuring a rotational part according to at least one of the preceding claims,
    also **characterized in that**

    -   the displacement vector is determined according to the method step B by determining the cartesian displacement components from

    $$sxx = sx - rx, \quad syy = sy - ry$$

    and

    $$\bar{s} = \begin{pmatrix} sxx \\ syy \end{pmatrix},$$

    -   where sx and sy are the cartesian values of the actual center of rotation in scanning, rx and ry are the cartesian values of the setpoint center of rotation and $\vec{s}$ is the displacement vector.

**7.** The method of measuring a rotational part according to at least one of the preceding claims, also **characterized in that**

- to determine the torsion or faulty angular position of the rotational part, the deviations of the displacement-corrected angle-based actual measured values from the angle-based setpoint measured values are determined and the angle at which the minimum deviation occurs is used as the correction angle for the faulty angle position of the displacement-corrected angle-based actual measured values.

**8.** A device for measuring a rotational part (1), in particular for determining the dimensional stability of a piston for internal combustion engines and other piston engines by scanning its surface at which angle-based actual measured values of the rotational part to be measured, preferably from a relative movement between a probe and the rotational part to be measured are used for comparison with the existing setpoint measured values, whereby the device has

- a receptacle device (3) for the rotational part (1),
- at least one measurement probe (5, 5') for scanning the rotational part when there is a relative rotation of the rotational part in relation to the measurement probe (5, 5'),
- a device for determining the angle between the measurement probe and the rotational part,
- a computer (11),
- which contains memory means for storing measured values and programs or can be connected to such means and
- can be connected to the measurement probe (5, 5') and the device for angle determination for accommodating the angle-based actual measured values,
- and an output device for displaying the results determined according to the method (12),

**characterized in that**
the following process program is implemented:

A. from a comparison of selected angle-based actual measured values, such angular positions at which changes in the actual measured values occur outside of a predetermined value or value range are determined and stored as the. discontinuity angle, and these discontinuity angles are used as the basis for dividing the outside shape of the rotational part into segments,
B. the eccentricity, i.e., the distance from the geometric center of rotation to the actual center of rotation of a segment of the rotational part is determined or when the actual measured values are obtained by some other method, the distance from the virtual center of rotation of a segment is determined from the actual measured values and the setpoint measured values,
C. in a first correction step displacement-corrected actual measured values are determined from the actual measured values by means of the displacement vector,
D. a measure for the torsion, i.e., the faulty position of the angle, of the rotational part in comparison with the setpoint measured values is determined from the actual measured values and corresponding setpoint measured values and by means of this torsion measure, torsion-corrected actual measured values are determined in a second correction step, and
E. the dimensional stability of the rotational part is determined by comparing the displacement-corrected and torsion-corrected, angle-based actual measured values with the angle-based setpoint measured values.

**9.** The device according to Claim 8, **characterized in that**

- the device (2) for accommodating a rotational part (1) on a rigid, i.e., undisplaceable base plate (3) with respect to the measurement probe (5) is mounted preferably in a stationary position so that it can rotate.

**10.** The device according to Claim 8 or 9, **characterized in that**

- the measurement probe (5) is mounted by means of an adjustable holding device (6, 8, 9) so that scanning of the rotational part (1) can be performed in at least two planes.

**11.** A use of an essentially known device for measuring a rotational part, comprising

- a receptacle device (2) for the rotational part (1),
- at least one measurement probe (5) for scanning the rotational part with relative rotation of the rotational part in relation to the measurement probe,
- a device for determining the angle between the measurement probe (5) and the rotational part (1),
- a computer (11),
- which contains memory means for storing measured values and programs or can be connected to such means and
- can be connected to the measurement probe (5) and the device for determining the angle for storing the angle-based actual measured values,
- and an output device for displaying the results thus obtained,

for performing the method according to at least one of Claims 1 through 7.

**Revendications**

1. Procédé pour le mesurage d'une pièce de révolution (1), en particulier pour la détermination de la tenue des cotes d'un piston pour des moteurs à combustion interne et d'autres machines à pistons, par balayage de sa surface, dans lequel pour la comparaison à des valeurs de mesures de consigne existantes, des valeurs de mesure réelles de la pièce de révolution à mesurer rapportées à l'angle sont obtenues, de préférence à partir d'un mouvement relatif entre un palpeur (5, 5') et la pièce de révolution à mesurer,
   **caractérisé en ce que**

   A. à partir de la comparaison entre elles de valeurs de mesure réelles choisies pour différents angles, de telles positions angulaires sont déterminées et sont mémorisées comme angles de saut, pour lesquels surviennent des modifications des valeurs de mesure réelles en dehors d'une valeur ou d'un intervalle de valeurs spécifié, et ces angles de saut servent de base pour la division en segments de la forme extérieure de la pièce de révolution (31),
   B. à partir des valeurs de mesure réelles et des valeurs de mesure de consigne, l'excentricité, c'est-à-dire la distance du centre de rotation géométrique au centre de rotation réel ou, lors de l'obtention des valeurs de mesure réelles d'une autre façon, du centre de rotation virtuel d'un segment de la pièce de révolution, est obtenu comme vecteur de décalage (32),
   C. dans une première étape de correction, des valeurs de mesure réelles corrigées en décalage sont déterminées à partir des valeurs de mesure réelles au moyen du vecteur de décalage (33),
   D. à partir des valeurs de mesure réelles et des valeurs de mesure de consigne correspondantes, une mesure de la torsion, c'est-à-dire du défaut de position angulaire de la pièce de révolution par rapport aux valeurs de mesure de consigne, est obtenue (34), et au moyen de cette mesure de torsion, des valeurs de mesure réelles corrigées en torsion sont déterminées dans une deuxième étape de correction (35), et
   E. la tenue des cotes de la pièce de révolution est déterminée par une comparaison des valeurs de mesure réelles rapportées à l'angle, corrigées en décalage et en torsion, aux valeurs de mesure de consigne rapportées à l'angle.

2. Procédé pour le mesurage d'une pièce de révolution selon la revendication 1,
   **caractérisé en outre en ce que**

   - au moins quelques-unes des valeurs de mesure réelles rapportées à l'angle sont comparées chacune une à une à des valeurs de mesure voisines à une distance prédéfinie et, si le résultat de la comparaison se trouve en dehors de la valeur ou de l'intervalle de valeurs prédéfini, l'angle correspondant est mémorisé comme angle de saut.

3. Procédé pour le mesurage d'une pièce de révolution selon la revendication 1,
   **caractérisé en outre en ce que**

   - les étapes du procédé A à D sont parcourues une ou plusieurs fois itérativement avec les valeurs de mesure réelles rapportées à l'angle, corrigées en décalage et en torsion.

4. Procédé pour le mesurage d'une pièce de révolution selon au moins l'une des revendications 1 ou 2,
   **caractérisé en outre en ce que**

- les valeurs de mesure réelles obtenues par la palpation de la pièce de révolution sont déterminées part rapport à l'angle avec une résolution de 0,5° à 2°, de préférence de 1°, et mémorisées, et
- la distance prédéfinie à laquelle au moins quelques-unes des valeurs de mesure réelles sont comparées à des valeurs de mesure réelles voisines est comprise entre 2° et 5°, de préférence de 3°.

5. Procédé pour le mesurage d'une pièce de révolution selon au moins l'une des revendications précédentes, **caractérisé en outre en ce que**

   - la valeur significative pour le résultat de la comparaison selon l'étape A du procédé, pour le dépassement de laquelle l'angle correspondant est mémorisé comme angle de saut, est choisie entre $K = 0,01$ et $K = 0,5$, de préférence à $K = 0,1$ comme constante dite du piston.

6. Procédé pour le mesurage d'une pièce de révolution selon au moins l'une des revendications précédentes, **caractérisé en outre en ce que**

   - la détermination du vecteur de décalage selon l'étape B du procédé s'effectue de façon telle que les composantes cartésiennes du décalage soient déterminées à partir de

$$sxx = sy - rx, \ syy = sy - ry$$

et

$$\vec{s} = \begin{pmatrix} sxx \\ syy \end{pmatrix},$$

   - où $sx$ et $sy$ sont les valeurs cartésiennes du centre de rotation réel lors de la palpation, $rx$ et $ry$ sont les valeurs cartésiennes du centre de rotation des valeurs de consigne et $\vec{S}$ est le vecteur de décalage.

7. Procédé pour le mesurage d'une pièce de révolution selon au moins l'une des revendications précédentes, **caractérisé en outre en ce que**

   - pour la détermination de la torsion ou du défaut de position angulaire de la pièce de révolution, les écarts des valeurs de mesure réelles rapportées à l'angle, corrigées en décalage, sont obtenus d'après des valeurs de mesure de consigne rapportées à l'angle, et l'angle auquel se produit le minimum de l'écart sert d'angle de correction pour le défaut de position angulaire des valeurs de mesure réelles rapportées à l'angle corrigées en décalage.

8. Procédé pour le mesurage d'une pièce de révolution (1), en particulier pour la détermination de la tenue des cotes d'un piston pour des moteurs à combustion interne et d'autres machines à pistons, par balayage de sa surface, dans lequel pour la comparaison à des valeurs de mesures de consigne existantes, on utilise des valeurs de mesure réelles, rapportées à l'angle, de la pièce de révolution à mesurer, de préférence à partir d'un mouvement relatif entre un palpeur et la pièce de révolution à mesurer, le dispositif comportant

   - un dispositif de réception (2) pour la pièce de révolution (1).
   - au moins un palpeur de mesure (5, 5') pour la palpation de la pièce de révolution lors d'une rotation relative de la pièce de révolution par rapport au palpeur de mesure (5, 5'),
   - un dispositif pour la détermination de l'angle entre le palpeur de mesure et la pièce de révolution,
   - un ordinateur (11),

      - qui contient des moyens de mémorisation pour l'enregistrement de valeurs de mesure et de programmes ou qui peut être connecté à de tels moyens et
      - peut être relié au palpeur de mesure (5, 5') et au dispositif de détermination de l'angle pour l'enregistrement des valeurs de mesure réelles rapportées à l'angle,
      - et un dispositif de sortie pour la représentation des résultats obtenus d'après le procédé (12),

**caractérisé en ce que**
le programme de procédé suivant est implémenté :

A. à partir de la comparaison entre elles de valeurs de mesure réelles choisies pour différents angles, de telles positions angulaires sont déterminées et sont mémorisées comme angles de saut, pour lesquels surviennent des modifications des valeurs de mesure réelles en dehors d'une valeur ou d'un intervalle de valeurs spécifié, et ces angles de saut servent de base pour la division en segments de la forme extérieure de la pièce de révolution,

B. à partir des valeurs de mesure réelles et des valeurs de mesure de consigne, l'excentricité, c'est-à-dire la distance du centre de rotation géométrique au centre de rotation réel ou, lors de l'obtention des valeurs de mesure réelles d'une autre façon, du centre de rotation virtuel d'un segment de la pièce de révolution, est obtenu comme vecteur de décalage,

C. dans une première étape de correction, des valeurs de mesure réelles corrigées en décalage sont déterminées à partir des valeurs de mesure réelles au moyen du vecteur de décalage,

D. à partir des valeurs de mesure réelles et des valeurs de mesure de consigne correspondantes, une mesure de la torsion, c'est-à-dire du défaut de position angulaire de la pièce de révolution par rapport aux valeurs de mesure de consigne, est obtenue (34), et au moyen de cette mesure de torsion, des valeurs de mesure réelles corrigées en torsion sont déterminées dans une deuxième étape de correction, et

E. la tenue des cotes de la pièce de révolution est déterminée par une comparaison des valeurs de mesure réelles rapportées à l'angle, corrigées en décalage et en torsion, aux valeurs de mesure de consigne rapportées à l'angle.

9. Dispositif selon la revendication 8,
   **caractérisé en ce que**

   - le dispositif (2) pour la réception d'une pièce de révolution (1) est monté tournant et de préférence stationnaire sur une plaque de base (3) rigide, c'est-à-dire non mobile, par rapport au palpeur de mesure (5).

10. Dispositif selon la revendication 8 ou 9,
    **caractérisé en ce que**

    - le palpeur de mesure (5) est monté au moyen d'un dispositif de maintien réglable (6, 8, 9) de telle sorte qu'une palpation de la pièce de révolution (1) peut s'effectuer dans au moins deux plans.

11. Utilisation d'un dispositif connu en soi pour le mesurage d'une pièce de révolution comportant

    - un dispositif de réception (2) pour la pièce de révolution (1).
    - au moins un palpeur de mesure (5) pour la palpation de la pièce de révolution lors d'une rotation relative de la pièce de révolution par rapport au palpeur de mesure,
    - un dispositif pour la détermination de l'angle entre le palpeur de mesure (5) et la pièce de révolution (1),
    - un ordinateur (11),

        - qui contient des moyens de mémorisation pour l'enregistrement de valeurs de mesure et de programmes ou qui peut être connecté à de tels moyens et
        - peut être relié au palpeur de mesure (5) et au dispositif de détermination de l'angle pour l'enregistrement des valeurs de mesure réelles rapportées à l'angle,

    - et un dispositif de sortie pour la représentation des résultats obtenus,

    pour l'exécution du procédé selon au moins l'une des revendications 1 à 7.

**Fig. 1**

Vermessung des Kolbens (nicht posit.) — 21

↓

Ermittlung der Kolben-position — 22 ← Korrektur manuell od. motorisch — 24

↓

Desachsiert od. verdreht? — 23 → ja

nein ↓

Vermessung des position. Kolbens — 25

↓

Ausgabe Formschrieb + Parameter — 26

**Fig. 2a**

21' — Vermessung des Kolbens (nicht posit.)

↓

Ermittlung + Berechnung des position. Formschriebs — 27

↓

26' — Ausgabe Formschrieb + Parameter

**Fig. 2b**

```
┌─────────────────────┐
│     Ermittlung      │
│        der          │────── 31
│    Sprungwinkel     │
└─────────────────────┘
          │
          ▼
┌─────────────────────┐
│   Ermittlung des    │
│   Verschiebungs-    │────── 32
│      vektors        │
└─────────────────────┘
          │
          ▼
┌─────────────────────┐
│   Verschiebungs-    │
│   Korrektur der     │────── 33
│     Ist-Werte       │
└─────────────────────┘
          │
          ▼
┌─────────────────────┐
│    Bestimmung       │
│     Winkel-         │────── 34
│   verdrehung        │
└─────────────────────┘
          │
          ▼
┌─────────────────────┐
│     Winkel-         │
│   korrektur der     │────── 35
│     Ist-Werte       │
└─────────────────────┘
```

**Fig. 3**